# EUROPÄISCHE PATENTSCHRIFT

(11) **EP 2 607 757 B1**
(45) Veröffentlichungstag und Bekanntmachung des Hinweises auf die Patenterteilung: **04.10.2017**
(21) Anmeldenummer: 12008278.9
(22) Anmeldetag: 12.12.2012
(51) Int. Cl.: F16J 15/34

(54) **Gleitringdichtung**
Slip ring seal
Bague d'étanchéité glissante

(30) Priorität: 21.12.2011 DE 102011122477
(43) Veröffentlichungstag der Anmeldung: 26.06.2013
(73) Patentinhaber: Kaco GmbH & Co. KG, 74072 Heilbronn (DE)
(72) Erfinder: Sauter, Bernd, 74889 Sinsheim (DE); Hoffmann, Tobias, 74388 Talheim (DE)
(74) Vertreter: Jackisch-Kohl, Anna-Katharina

(56) Entgegenhaltungen:
- EP-A1- 0 227 282
- US-A- 5 947 479

## Beschreibung

Die Erfindung betrifft eine Gleitringdichtung nach dem Oberbegriff des Anspruches 1.

Gleitringdichtungen werden beispielsweise bei Wasserpumpen von Kraftfahrzeugen verwendet. (Siehe EP-A-0227282). Die Gleitringdichtung muss so ausgebildet sein, dass sie auch ohne die abzudichtende Flüssigkeit ausreichend lang betrieben werden kann. Die im Dichtspalt zwischen Gegenring und Gleitring erzeugte Wärme darf weder zu einer thermischen Schädigung der Gleitpartner selbst noch zu einer thermischen Schädigung der die Gleitpartner umgebenden Dichtungskomponenten führen. Damit im Trockenlauf eine ausreichend niedrige Dichtspalttemperatur erreicht wird, werden für den Gleitring spezielle Kohle-Graphit-Werkstoffe eingesetzt, die verhältnismäßig weich sind. Solche Werkstoffe sind jedoch nicht sehr resistent gegenüber abrasivem Angriff. Der Gegenring besteht typischerweise aus einem harten Material, wie SiC. Eine solche Weich/Hart-Gleitpaarung hat somit eine geringere Lebensdauer als eine Hart/Hart-Gleitpaarung, bei der der Gegenring und der Gleitring beispielsweise aus SiC bestehen. Solche Gleitpaarungen haben jedoch vergleichsweise schlechte Trockenlaufeigenschaften. Die Gleitringdichtung ist darum mit einem Sammelraum versehen, in dem sich ein Kühl/Schmiermedium befindet, das der Gleitringdichtung die geforderte Trockenlaufbeständigkeit verleiht, auch wenn eine Weich/Hart-Gleitpaarung eingesetzt wird. Die Zuleitung dient dazu, das Kühl/Schmiermedium vom Aufnahmeraum der Pumpe zum Sammelraum der Gleitringdichtung zu bringen.

Der Erfindung liegt die Aufgabe zugrunde, die gattungsgemäße Gleitringdichtung so auszubilden, dass die Zuleitung in einfacher Weise an der Gleitringdichtung vorgesehen werden kann. Dabei soll die Zuleitung so vorgesehen werden, dass das im Sammelraum befindliche Kühl/Schmiermedium längere Zeit im Sammelraum verbleibt, wenn die Gleitringdichtung im Trockenlauf arbeitet.

Diese Aufgabe wird bei der gattungsgemäßen Gleitringdichtung erfindungsgemäß mit den kennzeichnenden Merkmalen des Anspruches 1 gelöst.

Die erfindungsgemäße Gleitringdichtung zeichnet sich dadurch aus, dass die Zuleitung zwischen dem radialen Gehäuseboden und dem radialen Ringabschnitt der Hülse liegt, mit welcher der Gegenring drehfest verbunden ist. Die Hülse der Gleitringdichtung wird mit der abzudichtenden Welle drehfest verbunden, beispielsweise auf diese aufgepresst. Da die Zuleitung von Bestandteilen der Gleitringdichtung begrenzt wird, lässt sich die Zuleitung sehr einfach und den jeweiligen Anforderungen entsprechend an der Gleitringdichtung vorsehen. Insbesondere kann die Höhe der Zuleitung sehr einfach eingestellt werden. Es ist dadurch möglich, die Zuleitung beispielsweise in einem Bereich zwischen 0,5 und 4 mm Höhe auszubilden. Der Gehäuseboden und der Ringabschnitt der Hülse werden bei der Montage der Gleitringdichtung entsprechend gegeneinander eingestellt, was in einfacher und kostengünstiger Weise möglich ist.

Wird die Gleitringdichtung beispielsweise an einer Wasserpumpe eines Kraftfahrzeuges eingesetzt, dann wird beim Befüllen der Wasserpumpe mit dem Kühl/Schmiermedium über die Zuleitung auch der Sammelraum der Gleitringdichtung mit diesem Medium gefüllt.

Vorteilhaft verläuft die Zuleitung radial. Eine solche Zuleitung lässt sich sehr einfach vorsehen.

Die Zuleitung ist vorteilhaft ein Ringspalt, der zwischen dem radialen Gehäuseboden und dem radialen Ringabschnitt der Hülse vorgesehen ist. Dadurch kann der Sammelraum der Gleitringdichtung einfach und rasch mit dem Kühl/Schmiermedium gefüllt werden.

Eine konstruktiv einfache Ausbildung ergibt sich, wenn die Zuleitung über ihre radiale Länge gerade verläuft. Dann kann das Kühl/Schmiermedium problemlos in den Sammelraum geleitet werden.

Es ist auch möglich, die Zuleitung so auszubilden, dass sie aus axial gegeneinander versetzten Abschnitten besteht. Eine solche Zuleitung lässt sich sehr einfach dadurch herstellen, dass der radiale Gehäuseboden und der radiale Ringabschnitt der Hülse entsprechend abgesetzte, verformte Abschnitte aufweisen. Durch einen solchen versetzten Verlauf der Zuleitung wird das Füllen des Sammelraumes nicht beeinträchtigt. Andererseits sorgt eine solche Ausbildung der Zuleitung dafür, dass das im Sammelraum befindliche Kühl/Schmiermedium im Falle des Trockenlaufes möglichst lange im Sammelraum gehalten wird.

Damit das Kühl/Schmiermedium einfach in die Zuleitung gelangt, ist der Gehäuseboden mit einer zentrischen Öffnung versehen, über die das Kühl/Schmiermedium in den Sammelraum strömen kann. Die zentrische Öffnung des Gehäusebodens ist so vorgesehen, dass durch sie die abzudichtende Welle verläuft und der Öffnungsrand diese Welle mit radialem Abstand umgibt.

Der Gegenring ist vorteilhaft zwischen einem äußeren zylindrischen Mantel und dem Ringabschnitt der Hülse angeordnet. Der Ringabschnitt bildet die eine Begrenzung der Zuleitung und geht in den äußeren zylindrischen Mantel über.

Damit das Medium lange im Sammelraum der Gleitringdichtung gehalten werden kann, ist das Verhältnis des radialen Abstandes des äußeren zylindrischen Mantels der Hülse vom Rand der zentrischen Öffnung im Gehäuseboden zum radialen Abstand des Randes der zentrischen Öffnung im Gehäuseboden zum inneren zylindrischen Mantel der Hülse in einem Bereich zwischen etwa 1,5:1 und etwa 3:1 vorgesehen. Durch dieses Abstandsverhältnis wird eine große radiale Länge der Zuführung erreicht, die eine lange Aufenthaltsdauer des Mediums im Sammelraum im Falle des Trockenlaufes gewährleistet. Das Medium im Sammelraum wird durch den rotierenden Gegenring zum einen im Sammelraum gleichmäßig verteilt und zum anderen in Rotation versetzt. Aufgrund des Abstandsverhältnisses ist trotz der Strömung des Mediums im Sammelraum gewährleistet, dass das Medium ausreichend lang im Sammelraum verbleibt und die Gleitpartner ausreichend kühlen bzw. schmieren kann.

Der Sammelraum ist vorteilhaft gegen den inneren zylindrischen Mantel der Hülse abgedichtet, so dass das Kühl/Schmiermedium nicht an den Gleitpartnern vorbei nach innen gelangen kann.

Bei einer vorteilhaften Ausführungsform ist das Gehäuse mit wenigstens einer in den Sammelraum mündenden Entlüftungsöffnung versehen, wodurch die Strömung des Mediums im Sammelraum gefördert wird.

Damit dieses Medium nicht durch die Entlüftungsöffnung nach außen tritt, ist die Entlüftungsöffnung durch mindestens ein Abdeckteil teilweise geschlossen. Mit ihm wird die Entlüftungsöffnung so weit gesperrt, dass eine Entlüftung möglich ist, dabei aber das im Sammelraum befindliche Medium nur langsam nach außen gelangen kann.

Bei einer vorteilhaften Ausführungsform ist dieser Abdeckteil ein verlängerter Abschnitt eines Federtellers, an dem sich eine den Gleitring axial belastende Druckfeder abstützt. Für den Abdeckteil ist darum kein gesonderter Bauteil erforderlich, der zusätzlich hergestellt und in der Gleitringdichtung montiert werden müsste.

Bei einer vorteilhaften Ausgestaltung können der Boden des Gehäuses und/oder der Ringabschnitt der Hülse mit drehrichtungsabhängigen oder drehrichtungsunabhängigen Strukturen und/oder Geometrien versehen sein. Dadurch kann eine Entlüftung des Ringspaltes erreicht werden. Außerdem wird dadurch ein Herausfließen des Kühl/Schmiermediums aus dem Sammelraum erschwert. Die Strukturen bzw. Geometrien sorgen in diesem Fall dafür, dass das Medium wieder zurück in Richtung auf den Sammelraum gefördert wird.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: im Axialschnitt eine Hälfte einer erfindungsgemäßen Wellendichtung,
- Fig. 2 und Fig. 3: jeweils in Darstellungen entsprechend Fig. 1 weitere Ausführungsformen von erfindungsgemäßen Wellendichtungen,
- Fig. 4: im Axialschnitt eine Wasserpumpe, in die eine erfindungsgemäße Wellendichtung eingebaut ist.

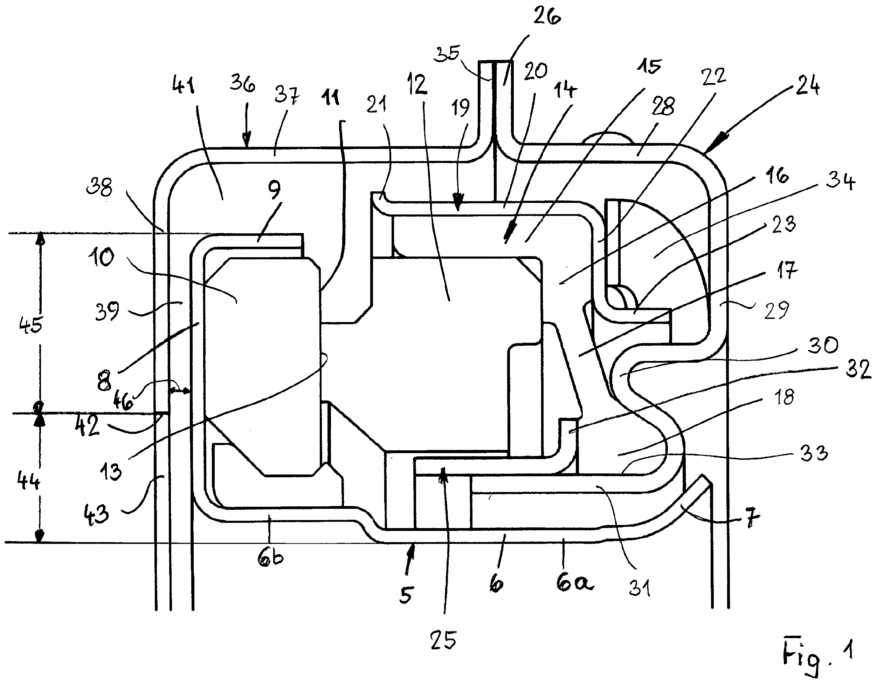

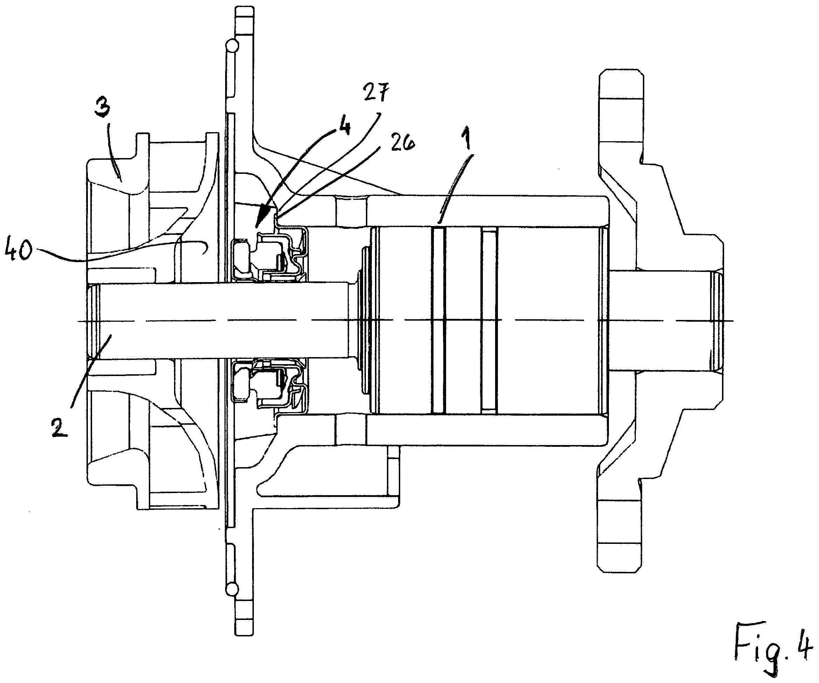

Die im Folgenden beschriebenen Wellendichtungen werden insbesondere für Wasserpumpen von Kraftfahrzeugen eingesetzt. In Fig. 4 ist beispielhaft eine derartige Wasserpumpe mit einem Gehäuse 1 dargestellt, in der eine Pumpenwelle 2 in bekannter Weise drehbar gelagert ist. Das aus dem Gehäuse 1 ragende Ende der Pumpenwelle 2 trägt ein Pumpenrad 3. Die Pumpenwelle 2 ist durch die Wellendichtung 4 abgedichtet, die im Gehäuse 1 eingebaut ist. Die Wellendichtung 4 ist eine Gleitringdichtung. Anhand der Fig. 1 bis 3 werden unterschiedliche Ausführungsformen dieser Gleitringdichtung näher beschrieben, die so ausgebildet ist, dass ein Trockenlaufen der Gleitpaarung verhindert wird.

Die Gleitrichtdichtung gemäß Fig. 1 hat eine Hülse 5, mit der die Gleitringdichtung auf der Pumpenwelle 2 sitzt. Die Hülse 5 hat einen Mantel 6, der über seine axiale Länge aus zwei radial gegeneinander versetzten Mantelabschnitten 6a und 6b besteht. Mit dem Mantelabschnitt 6a sitzt die Hülse 5 drehfest und mit Presssitz auf der Pumpenwelle 2. Der andere Mantelabschnitt 6b hat größere Innen- und Außendurchmesser als der Mantelabschnitt 6a. Damit die Gleitringdichtung zuverlässig auf die Pumpenwelle 2 aufgeschoben werden kann, ist das in Aufschieberichtung vordere Ende 7 des Mantels 6 trichterförmig aufgeweitet.

Am anderen Ende geht der Mantel 6 in einen radialen scheibenförmigen Ringabschnitt 8 über, dessen äußerer Rand 9 rechtwinklig abgebogen ist. Der zylindrische Rand 9 sowie der zylindrische Mantelabschnitt 6b umgeben mit radialem Abstand einen Gegenring 10, der an der Innenseite des Ringabschnittes 8 flächig anliegt. Die gegenüberliegende Seite des Gegenringes 10 bildet eine radial verlaufende Dichtfläche 11, an der ein Gleitring 12 mit einer ebenfalls radial verlaufenden Dichtfläche 13 dichtend anliegt. Der Gleitring 12 liegt unter einer Axialkraft mit seiner Dichtfläche 13 dichtend an der Dichtfläche 11 des Gegenringes 10 an. Der Gleitring 12 ist an der Innenseite eines Halteteiles 14 befestigt, das vorteilhaft aus elastischem Material besteht. Das Halteteil 14 hat einen äußeren zylindrischen Mantel 15, an dessen Innenwand der Gleitring 12 flächig anliegt. Der Mantel 15 geht in einen radial nach innen gerichteten Bodenabschnitt 16 über, der über einen Balgabschnitt 17 mit einem Ringabschnitt 18 verbunden ist. Der Balgabschnitt 17 hat kleinere Wanddicke als der Mantel 15, der Bodenabschnitt 16 und der Ringabschnitt 18.

Der Mantel 15 des Halteteils 14 liegt an der Innenseite eines zylindrischen Mantels 20 eines buchsenförmigen Zwischenelementes 19 an. Es ist in Richtung auf den Ringabschnitt 8 der Hülse 5 offen. Das freie Ende 21 des Mantels 20 ist konisch erweitert ausgebildet. Der Mantel 20 schließt an einen ringförmigen, radial verlaufenden Boden 22 an, an dessen Innenseite der Bodenabschnitt 16 des Halteteiles 14 anliegt. Der Boden 22 geht etwa in Höhe des Übergangs vom Bodenabschnitt 16 in den Balgabschnitt 17 in einen zylindrischen Mantel 23 über, der kleineren Durchmesser als der äußere Mantel 20 des Zwischenelementes 19 hat. Der Bodenabschnitt 16 des Halteteiles 14 ist zwischen dem Gleitring 12 und dem Boden 22 des Zwischenelementes 19 gehalten.

Der Ringabschnitt 18 ist zwischen einem Gehäuse 24 und einer Klemmhülse 25 eingeklemmt. Die Klemmhülse 25 liegt koaxial zum Zwischenelement 19 und ist drehfest mit dem Gehäuse 24 verbunden.

Das Gehäuse 24 ist im Wesentlichen napfförmig ausgebildet und hat einen nach außen ragenden Radialflansch 26, der in der Einbaulage (Fig. 4) an einer Anschlagfläche 27 des Pumpengehäuses 1 anliegt. Der nach außen ragende Radialflansch 26 ist am freien Rand eines zylindrischen Mantels 28 vorgesehen, der mit radialem Abstand das Zwischenelement 19 umgibt. Der Mantel 28 geht stetig gekrümmt in eine radial verlaufenden Boden 29 über, der den Mantel 28 mit einem Klemmabschnitt 30 verbindet. Er ist im Axialschnitt etwa U-förmig gekrümmt ausgebildet und gegen den Gleitring 12 gerichtet. Der Klemmabschnitt 30 geht stetig gekrümmt in einen inneren zylindrischen Mantel 31 über, der den Mantel 6 der Hülse 5 mit radialem Abstand umgibt. Auf dem Mantel 31 sitzt die Klemmhülse 25 drehfest.

Der Übergang des Klemmabschnittes 30 in den Mantel 31 liegt in Höhe des konisch erweiterten Endes 7 der Hülse 5. Die Klemmhülse 25 ist an ihrem dem Klemmabschnitt 30 des Gehäuses 24 zugewandten Ende mit einem radial nach außen verlaufenden Klemmflansch 32 versehen. Der Ringabschnitt 18 des Halteteiles 14 ist zwischen dem Klemmflansch 32 der Klemmhülse 25 und dem Klemmabschnitt 30 des Gehäuses 24 axial eingespannt. Der Ringabschnitt 18 und der Klemmabschnitt 30 sind so geformt, dass sie flächig aneinander liegen. Der Ringabschnitt 18 liegt außerdem mit einer radial inneren Zylinderfläche 33 auf der Außenseite des Mantels 31 des Gehäuses 24 an. Der Klemmflansch 32 hat axialen Abstand vom Gleitring 12. Auch der Mantel der Klemmhülse 25 hat radialen Abstand vom Gleitring 12.

Am Boden 22 des Zwischenelementes 19 greift ein Federelement 34 an, das sich an der Innenseite des Bodens 29 des Gehäuses 24 abstützt und am Boden 22 des Zwischenelementes 19 unter axialer Vorspannung anliegt. Dadurch wird der Gleitring 12 mit seiner Dichtfläche 13 fest gegen die Dichtfläche 11 des Gegenringes 10 gedrückt.

Am Radialflansch 26 des Gehäuses 24 ist ein Radialflansch 35 eines weiteren Gehäuses 36 befestigt. Es hat einen zylindrischen Mantel 37, der den Radialflansch 35 mit einem radial nach innen verlaufenden Boden 38 verbindet. Er liegt dem Ringabschnitt 8 der Hülse 5 mit axialem Abstand gegenüber. Der Boden 38 endet mit radialem Abstand vom Mantelabschnitt 6b der Hülse 5. Der Boden 38 überlappt den Ringabschnitt 8 über mehr als die halbe radiale Breite des Ringabschnittes 8. Der Bodenabschnitt 38 und der Ringabschnitt 8 begrenzen axial einen Ringspalt 39, der aufgrund der beschriebenen großen Überlappung zwischen Boden 38 und Ringabschnitt 8 eine große radiale Länge hat.

Über den Ringspalt 39 ist der das Kühl/Schmiermedium aufnehmende Innenraum 40 der Pumpe (Fig. 4) mit einem Sammelraum 41 der Wellendichtung 4 verbunden. Ist die Pumpe mit dem Medium gefüllt, dann befindet sich das Medium auch im Sammelraum 41 der Wellendichtung 4. Das im Sammelraum 41 befindliche Medium gelangt nicht an die Pumpenwelle 2 im Bereich der Wellendichtung, weil der Dichtspalt zwischen dem Gegenring 10 und dem Gleitring 12 geschlossen ist. Der Sammelraum 41 wird beim Befüllen der Pumpe mit dem Kühl/Schmiermedium über den Ringspalt 39 automatisch gefüllt. Das im Sammelraum 41 befindliche Medium stellt sicher, dass die Wellendichtung 4 über einen ausreichend langen Zeitraum auch dann betrieben werden kann, wenn die Pumpe kein Kühl/Schmiermedium mehr enthält. Das im Sammelraum 41 befindliche Medium stellt sicher, dass der Gegenring 10 und der Gleitring 12 nicht trocken laufen, wenn die Pumpe kein Medium mehr enthält. Dadurch ist es auch möglich, den Gegenring 10 und den Gleitring 12 aus Materialien herzustellen, die ohne das im Sammelraum 41 befindliche Kühl/Schmiermedium sehr rasch verschleißen würden.

Da sich der Ringspalt 39 über mehr als die halbe radiale Dicke des Gegenringes 10 erstreckt, wird erreicht, dass das im Sammelraum 41 befindliche Medium nicht rasch über den Ringspalt abfließt, sondern über längere Zeit hinweg im Sammelraum 41 zurückgehalten wird. Hierzu trägt auch bei, dass der Rand 42 der zentralen Öffnung 43 des Bodens 38 nur geringen radialen Abstand vom Mantelabschnitt 6b bzw. vom Mantelabschnitt 6a aufweist. Der Öffnungsrand 42 ist so vorgesehen, dass sein radialer Abstand 44 vom Mantelabschnitt 6a und damit von der Pumpenwelle kleiner ist als der radiale Abstand 45 vom Rand 9 der Hülse 5. Das Verhältnis des Abstandes 45 zum Abstand 44 liegt vorteilhaft in einem Bereich zwischen etwa 1,5:1 bis etwa 3:1. Dadurch ist gewährleistet, dass auch über einen längeren Einsatz der Wellendichtung 4 ausreichend Medium zur Kühlung/Schmierung von Gegenring 10 und Gleitring 12 vorhanden ist, selbst wenn die Pumpe kein Medium mehr enthält. Aufgrund des verhältnismäßig langen Ringspaltes 39, in Radialrichtung gemessen, ist zudem sichergestellt, dass das Medium nur sehr langsam aus dem Sammelraum 41 nach außen gelangt. Der Ringspalt hat zudem nur geringe axiale Höhe 46 von beispielsweise nur etwa 0,5 bis 5 mm, so dass in Verbindung mit der großen radialen Breite des Ringspaltes 39 eine ausreichend lange Betriebsdauer der Wellendichtung 4 für den Fall sichergestellt ist, dass die Pumpe kein Kühl/Schmiermedium mehr enthält.

Der Boden 38 des Gehäuses 36 kann in vorteilhafter Weise auf seiner dem Ringabschnitt 8 zugewandten Innenseite eine drehrichtungsabhängige oder auch drehrichtungsunabhängige Struktur aufweisen. Eine solche (nicht dargestellte) Struktur kann zum Beispiel durch Lasern, Schleifen und dergleichen hergestellt werden. Eine solche Struktur sorgt dafür, dass das Kühl/ Schmiermedium im Ringspalt 39 beim Einsatz der Gleitringdichtung in Richtung auf den Sammelraum 41 zurückgefördert wird. Dadurch ist sichergestellt, dass im Sammelraum 41 stets ausreichend Medium vorhanden ist, so dass die Wellendichtung 4 auch über längere Zeit betrieben werden kann, wenn die Pumpe selbst kein Kühl/Schmiermedium mehr enthält.

Anstelle der Struktur an der Innenseite des Bodens 38 kann der Boden 38 selbst eine drehrichtungsabhängige oder drehrichtungsunabhängige Geometrie aufweisen. Diese Geometrie des Bodens 38 erstreckt sich vorteilhaft über die gesamte radiale Breite des Bodens 38. Ist diese Geometrie beispielsweise eine Wellenform, dann erstrecken sich die Wellen über den Umfang des Bodens 38. Diese Geometrie ist ebenfalls so gestaltet, dass das Kühl/Schmiermedium im Längsspalt 39 wieder zurück in Richtung auf den Sammelraum 41 gefördert wird.

Bei einer weiteren (nicht dargestellten) Ausführungsform kann die drehrichtungsabhängige oder auch drehrichtungsunabhängige Struktur bzw. Geometrie am Ringabschnitt 8 der Hülse 5 vorgesehen sein. Die Struktur ist in diesem Falle an der dem Boden 38 zugewandten Seite des Ringabschnittes 8 vorgesehen. Die Geometrie, beispielsweise eine Wellenform, ist lediglich an der Außenseite des Ringabschnittes 8 vorgesehen und wird in diesem Falle durch eine entsprechende Prägung der Außenseite des Ringabschnittes 8 gebildet. Im Übrigen können die Struktur und die Geometrie des Ringabschnittes 8 gleich ausgebildet sein wie diejenigen des Bodens 38. Auch die Strukturen und Geometrien des Ringabschnittes 8 gewährleisten, dass das aus dem Sammelraum 41 in den Ringspalt 39 gelangende Medium wieder zurück in den Sammelraum 41 beim Einsatz der Gleitringdichtung gefördert wird.

Schließlich ist es möglich, sowohl am Boden 38 als auch am Ringabschnitt 8 die genannten Strukturen und Geometrien vorzusehen.

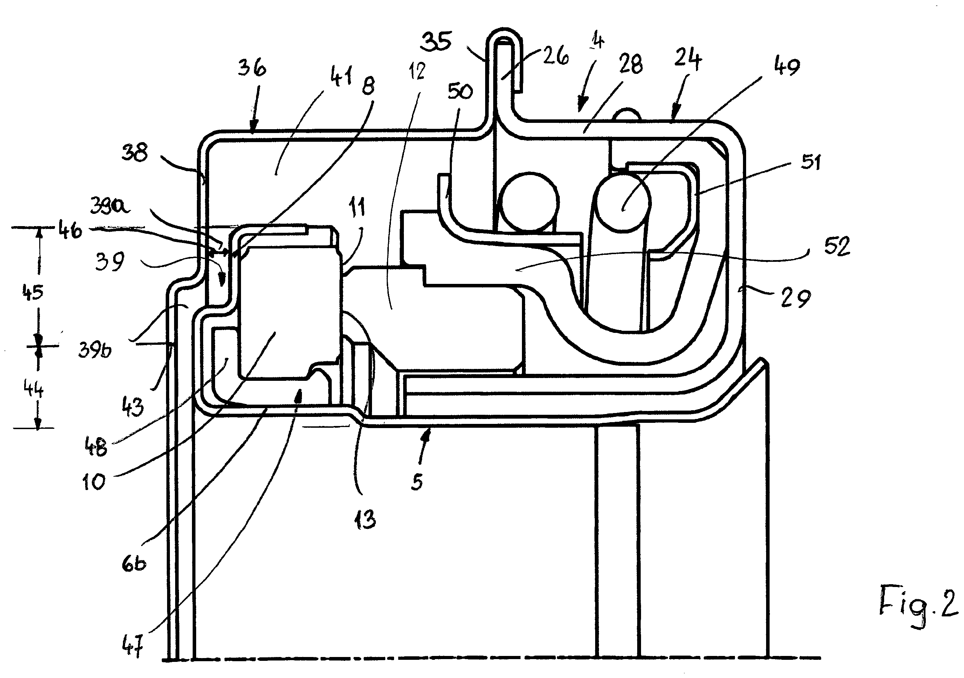

Bei der Ausführungsform gemäß Fig. 2 ist der Ringspalt 39 so ausgebildet, dass das im Sammelraum 41 der Wellendichtung 4 befindliche Kühl/ Schmiermedium zuverlässig zurückgehalten wird, so dass ein frühzeitiges Entweichen des Mediums vermieden wird.

Der Ringspalt 39 besteht aus zwei axial gegeneinander versetzten Spaltabschnitten 39a, 39b. Der radial innen liegende Ringspaltabschnitt 39b ist in Axialrichtung der Wellendichtung 5 gegenüber dem Ringspaltabschnitt 39a nach außen versetzt. Um diese Form des Ringspaltes 39 zu erreichen, ist der Boden 38 des Gehäuses 36 sowie der Ringabschnitt 8 der Hülse 5 entsprechend geformt. Der die Öffnung 43 umgebende Bereich des Bodens 38 ist axial nach außen versetzt. Der Ringabschnitt 8 hat dementsprechend einen axial nach außen verformten Abschnitt, der bogenförmig in den Mantelabschnitt 6b der Hülse übergeht. Der Ringspalt 39 hat entsprechend der vorigen Ausführungsform über seine radiale Breite vorteilhaft gleiche Höhe 46.

Der Gegenring 10 ist wie bei der vorigen Ausführungsform verdrehfest mit der Hülse 5 verbunden. Diese Verdrehsicherung ist in bekannter Weise ausgebildet und darum auch nicht näher beschrieben. Der Gegenring 10 sitzt wie beim Ausführungsbeispiel nach Fig. 1 über eine Haltemanschette 47, die aus elastomerem Material besteht, auf dem Mantelabschnitt 6b der Hülse 5. Die Haltemanschette 47 ist in bekannter Weise hülsenförmig ausgebildet und an ihrem dem Boden 38 des Gehäuses 36 zugewandten Ende mit einem radial nach außen gerichteten Flansch 48 versehen, an dem der Gegenring 10 über einen Teil seiner radialen Breite anliegt. Mit seinem radial äußeren Bereich liegt der Gegenring außerdem an der Innenseite des Ringabschnittes 8 der Hülse 5 an.

Der Gleitring 12 steht unter der Kraft einer Druckfeder 49, die sich mit ihren Enden jeweils an einem Federteller 50, 51 abstützt. Beide Federteller 50, 51 sind ihrerseits an einem Balgelement 52 abgestützt, das an einem Ende mit dem Gleitring 12 verbunden und am anderen Ende an der Innenseite des Mantels 28 sowie des Bodens 29 des Gehäuses 24 abgestützt ist. Der Federteller 50 liegt unter der Kraft der Druckfeder 49 am Balgelement 52 an.

Das Balgelement 52 umgreift den Federteller 51 in bekannter Weise. Die Druckfeder 49 übt über das Balgelement 52 eine Axialkraft auf den Gleitring 12 aus, der dadurch mit seiner Dichtfläche 13 gegen die Dichtfläche 11 des Gegenringes 10 gedrückt wird.

Im Unterschied zum Ausführungsbeispiel nach Fig. 1 umgreift der Radialflansch 35 des Gehäuses 36 den Radialflansch 26 des Gehäuses 24.

Das Verhältnis der Abstände 45 zu 44 liegt im Bereich zwischen etwa 1,5:1 und etwa 3:1. Dadurch ist wiederum gewährleistet, dass die Wellendichtung 4 ausreichend lange eingesetzt werden kann, selbst wenn die Pumpe kein Kühlmittel mehr enthalten sollte. Aufgrund dieses Abstandsverhältnisses verbleibt ausreichend Kühl/Schmiedmedium im Sammelraum 41, so dass der Gegenring 10 und der Gleitring 12 ausreichend lange gekühlt/ geschmiert werden können. Zudem trägt der abgesetzte Verlauf des Ringspaltes 39 dazu bei, dass auch bei längerem Einsatz der Wellendichtung 4 das im Sammelraum 41 befindliche Medium nur langsam nach außen gelangt, wenn die Pumpe kein Medium mehr hat. Der abgesetzte Boden 38 und der abgesetzte Ringabschnitt 8 führen zu einer Verlängerung des Strömungsweges des Mediums aus dem Sammelraum 41 bei gleicher radialer Breite der Wellendichtung 4 bzw. des Gehäuses 36.

Während bei der Ausführungsform gemäß Fig. 2 der Boden 38 axial nach außen abgesetzt ist, ist es auch möglich, dass der Boden 38 axial nach innen abgesetzt ist. Dementsprechend ist auch der Ringabschnitt 8 der Hülse 5 axial nach innen abgesetzt. Auch auf diese Weise kann ein langer Strömungsweg für das Kühl/Schmiermedium erreicht werden.

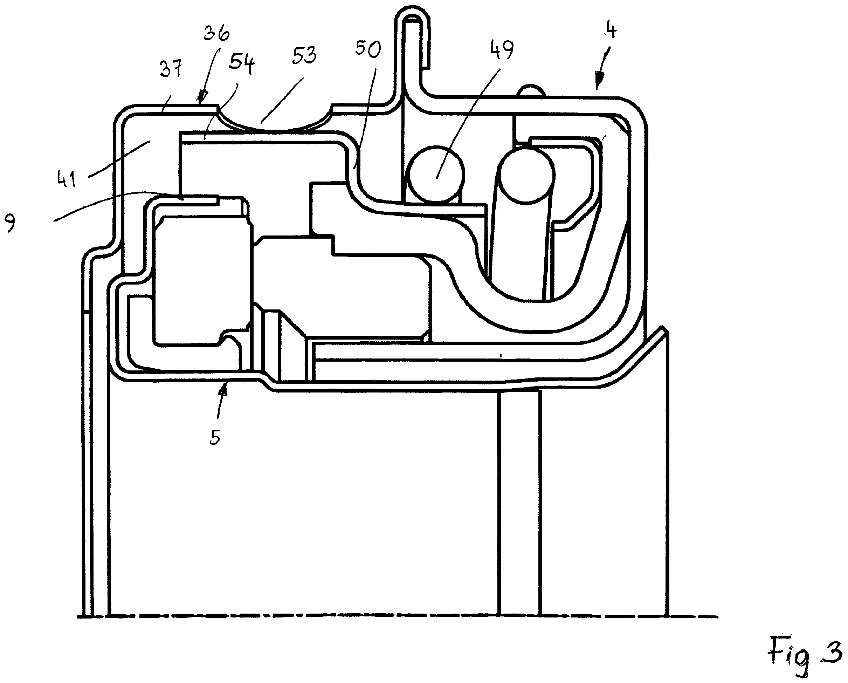

Die Ausführungsform gemäß Fig. 3 ist im Wesentlichen gleich ausgebildet wie das Ausführungsbeispiel nach Fig. 2. Unterschiedlich ist nur, dass im Mantel 37 des Gehäuses 36 wenigstens eine Entlüftungsöffnung 53 vorgesehen ist. Diese Öffnung 53 ist durch ein Abdeckteil 54 größtenteils abgedeckt, so dass das im Sammelraum 41 befindliche Kühl/Schmiermedium nicht ungehindert durch die Entlüftungsöffnung 53 nach außen treten kann. Der Abdeckteil 54 kann ein eigenständiges Bauteil sein. Bevorzugt ist das Abdeckteil 54 jedoch ein verlängerter Teil des Federtellers 50, an dem sich das eine Ende der Druckfeder 49 axial abstützt. Dadurch ergibt sich eine sehr einfache Ausbildung der Wellendichtung 4 und insbesondere auch ein sehr einfacher Zusammenbau. Das verlängerte Ende 54 des Federtellers 50 erstreckt sich bis in den Bereich des Randes 9 der Hülse 5. Der Abdeckteil 54 umgibt den Rand 9 mit radialem Abstand.

Die Entlüftungsöffnung 53 wird so durch den Abdeckteil 54 abgedeckt, dass der freie Öffnungsquerschnitt nur so groß ist, dass eine Entlüftung des Sammelraumes 41 gewährleistet ist, dass das im Sammelraum befindliche Medium jedoch nur minimal durch die Entlüftungsöffnung 53 nach außen gelangen kann.

Auch bei den Ausführungsformen gemäß den Fig. 2 und 3 können die anhand von Fig. 1 beschriebenen Strukturen bzw. Geometrien vorgesehen sein.

Bei sämtlichen Ausführungsformen dienen die drehrichtungsabhängigen oder auch drehrichtungsunabhängigen Strukturen bzw. Geometrien auch der Entlüftung.

## Patentansprüche

1. Gehäuse (24,36) mit einer Gleitringdichtung mit einem Gegenring (10) und einem Gleitring (12), die in dem Gehäuse (24, 36) liegen, in dem sich ein Sammelraum (41) für ein Kühl/Schmiermedium befindet, in den wenigstens eine Zuleitung (39) mündet, die zwischen einem radialen Boden (38) des Gehäuses (24, 36) und einem radialen Ringabschnitt (8) einer Hülse (5) liegt, mit der der Gegenring (10) drehfest verbunden ist,
**dadurch gekennzeichnet, dass** der Gleitring (12) an der Innenseite eines Halteteiles (14) befestigt ist, das einen äußeren zylindrischen Mantel (15) aufweist, an dessen Innenwand der Gleitring (12) flächig anliegt und der in einen radial nach innen gerichteten Bodenabschnitt (16) übergeht, der über einen Balgabschnitt (17) mit einem Ringabschnitt (18) des Halteteiles (14) verbunden ist.

2. Gehaüse (24,36) mit einer Gleitringdichtung mit einem Gegenring (10) und einem Gleitring (12), die in dem Gehäuse (24, 36) liegen, in dem sich ein Sammelraum (41) für ein Kühl/Schmiermedium befindet, in den wenigstens eine Zuleitung (39) mündet, die zwischen einem radialen Boden (38) des Gehäuses (24, 36) und einem radialen Ringabschnitt (8) einer Hülse (5) liegt, mit der der Gegenring (10) drehfest verbunden ist,
**dadurch gekennzeichnet, dass** der Gleitring (12) unter der Kraft einer Druckfeder (49) steht, deren Enden jeweils an einem Federteller (50, 51) abgestützt sind, und dass die Federteller (50, 51) an einem Balgelement (52) abgestützt sind, das an einem Ende mit dem Gleitring (12) verbunden und am anderen Ende an der Innenseite eines Mantel (28) sowie eines Bodens (29) des Gehäuses (24, 36) abgestützt ist.

3. Gehäuse (24,36) mit einer Gleitringdichtung nach Anspruch 1 oder 2, **dadurch gekennzeichnet, dass** die Zuleitung (39) radial verläuft.

4. Gehäuse (24,36) mit einer Gleitringdichtung nach einem der Ansprüche 1 bis 3,
**dadurch gekennzeichnet, dass** die Zuleitung (39) ein Ringspalt ist.

5. Gehäuse (24,36) mit einer Gleitringdichtung nach einem der Ansprüche 1 bis 4,
**dadurch gekennzeichnet, dass** die Zuleitung (39) über ihre radiale Länge gerade verläuft.

6. Gehäuse (24,36) mit einer Gleitringdichtung nach einem der Ansprüche 1 bis 4,
**dadurch gekennzeichnet, dass** die Zuleitung (39) aus axial gegeneinander versetzten Abschnitten (39a, 39b) besteht.

7. Gehäuse (24,36) mit einer Gleitringdichtung nach einem der Ansprüche 1 bis 6,
**dadurch gekennzeichnet, dass** der Boden (38) des Gehäuses (24, 36) eine zentrische Öffnung (43) aufweist.

8. Gehäuse (24,36) mit einer Gleitringdichtung nach einem der Ansprüche 1 bis 7,
**dadurch gekennzeichnet, dass** der Gegenring (10) zwischen einem äußeren zylindrischen Mantel (9) und dem Ringabschnitt (8) der Hülse (5) aufgenommen ist.

9. Gehäuse, (24,36) mit einer Gleitringdichtung, insbesondere nach einem der Ansprüche 1 bis 8,
**dadurch gekennzeichnet, dass** das Verhältnis des radialen Abstandes (45) des äußeren zylindrischen Mantels (8) der Hülse (5) vom Rand (42) der zentrischen Öffnung (43) im Gehäuseboden (38) zum radialen Abstand (44) des Randes (42) der zentrischen Öffnung (43) im Gehäuseboden (38) zum inneren zylindrischen Mantel (6) der Hülse (5) zwischen etwa 1,5:1 und etwa 3:1 liegt.

10. Gehäuse (24,36) mit einer Gleitringdichtung nach einem der Ansprüche 1 bis 9,
**dadurch gekennzeichnet, dass** der Sammelraum (41) gegen den inneren zylindrischen Mantel (6) der Hülse (5) abgedichtet ist.

11. Gehäuse (24,36) mit einer Gleitringdichtung nach einem der Ansprüche 1 bis 10,
**dadurch gekennzeichnet, dass** das Gehäuse (24, 36) wenigstens eine in den Sammelraum (41) mündende Entlüftungsöffnung (53) aufweist.

12. Gehäuse (24,36) mit einer Gleitringdichtung nach Anspruch 11,
**dadurch gekennzeichnet, dass** die Entlüftungsöffnung (53) durch mindestens einen Abdeckteil (54) teilweise geschlossen ist, der vorteilhaft ein verlängerter Abschnitt eines Federtellers (50) ist, an dem sich eine den Gleitring (12) axial belastende Druckfeder (49) abstützt.

13. Gehäuse (24,36) mit einer Gleitringdichtung nach einem der Ansprüche 1 bis 12,
**dadurch gekennzeichnet, dass** der Boden (38) des Gehäuses (24, 36) eine drehrichtungsabhängige oder drehrichtungsunabhängige Struktur aufweist.

14. Gehäuse (24,36) mit einer Gleitringdichtung nach einem der Ansprüche 1 bis 13,
**dadurch gekennzeichnet, dass** der Boden (38) des Gehäuses (24, 36) eine drehrichtungsabhängige oder drehrichtungsunabhängige Geometrie aufweist.

15. Gehäuse (24,36) mit einer Gleitringdichtung nach einem der Ansprüche 1 bis 14,
**dadurch gekennzeichnet, dass** der radiale Ringabschnitt (8) der Hülse (5) eine drehrichtungsabhängige oder drehrichtungsunabhängige Struktur aufweist.

16. Gehäuse (24,36) mit einer Gleitringdichtung nach einem der Ansprüche 1 bis 15,
**dadurch gekennzeichnet, dass** der radiale Ringabschnitt (8) der Hülse (5) eine drehrichtungsabhängige oder drehrichtungsunabhängige Geometrie aufweist.

17. Wasserpumpe von Kraftfahrzeugen, mit einem Gehäuse (1), in dem eine Pumpenwelle (2) drehbar gelagert ist, deren aus dem Gehäuse (1) ragendes Ende ein Pumpenrad (3) trägt und die durch ein Gehäuse (24,36) mit einer Gleitringdichtung (4) gemäß einem der Ansprüche 1 bis 16 abgedichtet ist, wobei ein das Kühhl/Schmiemedium aufnehmender Innenraum (40) der Wasserpumpe mit dem Sammelraum (41) der Gleitringdichtung (4) über die Zuleitung (39) verbunden ist.

## Claims

1. A housing (24, 36) with a slip ring seal comprising a counter-ring (10) and a slip ring (12) which are positioned in the housing (24, 36), in which a collecting space (41) for a coolant/lubricant medium is positioned, into which at least one supply line (39) leads, which is positioned between a radial bottom (38) of the housing (24, 36) and a radial annular segment (8) of a sleeve (5), to which the counter-ring (10) is connected in a non-rotatable manner,
**characterized in that** the slip ring (12) is fastened to the inside of a fastening holder (14) which has an outer cylindrical wall (15), against the inner wall of which the slip ring (12) bears in a planar manner and which merge into a radially inwardly directing bottom segment (16) which is connected via a below segment (17) to an annular segment (18) of the fastening part (14).

2. A housing (24, 36) with a slip ring seal comprising a counter-ring (10) and a slip ring (12) which are positioned in the housing (24, 36) in which a collecting space (41) for a cooling/lubricating medium is positioned, into which at least one supply line (39) leads, which is positioned between a radial bottom (38) of the housing (24, 36) and a radial annular segment (8) of a sleeve (5), to which the counter-ring (10) is connected in a non-rotatable manner,
**characterized in that** the slip ring (12) is loaded by a compression spring (49), the ends of which are each supported on a spring plate (50, 51), and that the spring plates (50, 51) are supported on a bellow member (52) which is connected to the slip ring (12) at one end and is supported at the other end on the inside of a wall (28) and also of a bottom (29) of the housing (24, 36).

3. A housing (24, 36) with a slip ring seal according to claim 1 or 2,
**characterized in that** the supply line (39) runs radially.

4. A housing (24, 36) with a slip ring seal according to one of claims 1 to 3,
**characterized in that** the supply line (39) is an annular gap.

5. A housing (24, 36) with a slip ring seal according to one of claims 1 to 4,
**characterized in that** the supply line (39) runs straight over its radial length.

6. A housing (24, 36) with a slip ring seal according to one of claims 1 to 4,
**characterized in that** the supply line (39) comprises segments (39a, 39b) axially shifted in relative respect of to one another.

7. A housing (24, 36) with a slip ring seal according to one of claims 1 to 6,
**characterized in that** the bottom (38) of the housing (24, 36) has a central opening (43).

8. A housing (24, 36) with a slip ring seal according to one of claims 1 to 7,
**characterized in that** the counter-ring (10) is received between an outer cylindrical wall (9) and the annular segment (8) of the sleeve (5).

9. A housing (24, 36) with a slip ring seal, in particular according to one of claims 1 to 8,
**characterized in that** the ratio of the radial distance (45) of the outer cylindrical wall (9) of the sleeve (5) from the edge (42) of the central opening (43) in the housing bottom (38) to the radial distance (44) of the edge (42) of the central opening (43) in the bottom (38) of the housing (36) to the inner cylindrical wall (6) of the sleeve (5) is between roughly 1,5:1 and about 3:1.

10. A housing (24, 36) with a slip ring seal according to one of claims 1 to 9,
**characterized in that** the collecting space (41) is sealed in respect of the inner cylindrical wall (6) of the sleeve (5).

11. A housing (24, 36) with a slip ring seal according to one of claims 1 to 10,
**characterized in that** the housing (24, 36) has at least one venting hole (53) opening into the collecting space (41).

12. A housing (24, 36) with a slip ring seal according to claim 11,
**characterized in that** the venting hole (53) is partially closed by at least one cover part (54) which is advantageously an extended section of a spring plate (50), on which a compression spring (49) axially loading the slip ring (12) rests.

13. A housing (24, 36) with a slip ring seal according to one of claims 1 to 12,
**characterized in that** the bottom (38) of the housing (24, 36) has a rotational-direction-dependent or rotational-direction-independent structure.

14. A housing (24, 36) with a slip ring seal according to one of claims 1 to 13,
**characterized in that** the bottom (38) of the housing (24, 36) has a rotational-direction-dependent or rotational-direction-independent geometry.

15. A housing (24, 36) with a slip ring seal according to one of claims 1 to 14,
**characterized in that** the radial annular segment (8) of the sleeve (5) has a rotational-direction-dependent or rotational-direction-independent structure.

16. A housing (24, 36) with a slip ring seal according to one of claims 1 to 15,
**characterized in that** the radial annular segment (8) of the sleeve (5) has a rotation-dependent or rotation-independent structure.

17. A water pump of motor vehicles with a housing (1) in which a pump shaft (2) is rotatably mounted, the end whereof projecting from the housing (1) supports a pump wheel (3) and which is sealed by a housing (24, 36) with a slip ring seal (4) according to one of claims 1 to 16,
wherein an inner chamber (40) of the water pump receiving the coolant/lubricant medium is connected to the collecting space (41) of the slip ring seal (4) via the supply line (39).

## Revendications

1. Boîtier (24, 36) comportant une bague d'étanchéité glissante dotée d'une contre-bague (10) et d'une bague glissante (12) qui se situent dans le boîtier (24, 36), dans lequel se trouve un espace de collecte (41) pour un fluide de refroidissement/lubrification, espace dans lequel débouche au moins une conduite d'alimentation (39) qui se trouve entre un fond radial (38) du boîtier (24, 36) et une section annulaire radiale (8) d'un manchon (5) auquel la contre-bague (10) est raccordée de manière fixe en rotation,
**caractérisé en ce que** la bague glissante (12) est fixée à la face interne d'une pièce de retenue (14) qui présente une chemise cylindrique externe (15) sur de la paroi de laquelle la bague glissante (12) repose et qui transite dans une section de fond dirigée radialement vers l'intérieur (16) qui est raccordée par une portion de soufflet (17) à une section annulaire (18) de la pièce de retenue (14).

2. Boîtier (24, 36) comportant une bague d'étanchéité glissante dotée d'une contre-bague (10) et d'une bague glissante (12) qui se situent dans le boîtier (24, 36), dans lequel se trouve un espace de collecte (41) pour un fluide de refroidissement/lubrification, espace dans lequel débouche au moins une conduite d'alimentation (39) qui se trouve entre un fond radial (38) du boîtier (24, 36) et une section annulaire radiale (8) d'un manchon (5) auquel la contre-bague (10) est raccordée de manière fixe en rotation,
**caractérisé en ce que** la bague glissante (12) est sous l'emprise de la force d'un ressort de compression (49) dont les extrémités s'appuient respectivement à un plateau de ressort (50, 51) et que le plateau de ressort (50, 51) s'appuie au niveau d'un élément en soufflet (52) qui est raccordé par une extrémité à la bague glissante (12) et par l'autre extrémité à la face interne d'une chemise (28) et d'un fond (29) du boîtier (24, 36).

3. Boîtier (24, 36) comportant une bague d'étanchéité glissante selon la revendication 1 ou 2, **caractérisé en ce que** la conduite d'alimentation (39) est orientée radialement.

4. Boîtier (24, 36) comportant une bague d'étanchéité glissante selon une des revendications 1 à 3, **caractérisé en ce que** la conduite d'alimentation (39) est une fente annulaire.

5. Boîtier (24, 36) comportant une bague d'étanchéité glissante selon une des revendications 1 à 4, **caractérisé en ce que** la conduite d'alimentation (39) a une extension rectiligne sur sa longueur radiale.

6. Boîtier (24, 36) comportant une bague d'étanchéité glissante selon une des revendications 1 à 4, **caractérisé en ce que** la conduite d'alimentation (39} est composée de sections décalées axialement les unes par rapport aux autres (39a, 39b).

7. Boîtier (24, 36) comportant une bague d'étanchéité glissante selon une des revendications 1 à 6, **caractérisé en ce que** le fond (38) du boîtier (24, 36) présente une ouverture centrée (43).

8. Boîtier (24, 36) comportant une bague d'étanchéité glissante selon une des revendications 1 à 7, **caractérisé en ce que** la contre-bague (10) est reçue entre une paroi cylindrique externe (9) et la section annulaire (8) du manchon (5).

9. Boîtier (24, 36) comportant une bague d'étanchéité glissante, en particulier selon une des revendications 1 à 8, **caractérisé en ce que** le rapport entre la distance radiale (45) de la paroi cylindrique extérieure (9) du manchon (5) jusqu'au du bord (42) de l'ouverture centrée (43) du fond du boîtier (38) et la distance radiale (44) du bord de l'ouverture centrée (42) de l'ouverture centrale (43) du fond du boîtier (38) jusqu'à la paroi cylindrique interne (6) du manchon (5) se situe entre environ 1,5 à 1 et environ 3 à 1.

10. Boîtier (24, 36) comportant une bague d'étanchéité glissante selon une des revendications 1 à 9, **caractérisé en ce que** l'espace de collecte (41) est isolé par rapport à la paroi cylindrique intérieure (6) du manchon (5).

11. Boîtier (24, 36) comportant une bague d'étanchéité glissante selon une des revendications 1 à 10, **caractérisé en ce que** le boîtier (24, 36) présente au moins une ouverture de purge d'air (53) débouchant dans l'espace de collecte (41).

12. Boîtier (24, 36) comportant une bague d'étanchéité glissante selon la revendication 11, **caractérisé en ce que** l'ouverture de purge d'air (53) est fermée par au moins une pièce de recouvrement (54) qui est avantageusement une section prolongée d'un plateau de ressort (50) sur lequel s'appuie un ressort de compression (49) chargeant axialement la bague glissante (12).

13. Boîtier (24, 36) comportant une bague d'étanchéité glissante selon une des revendications en 1 à 12, **caractérisé en ce que** le fond (38) du boîtier (24, 36) présente une structure dépendant du sens de rotation ou ne dépendant pas du sens de rotation.

14. Boîtier (24, 36) comportant une bague d'étanchéité glissante selon une des revendications 1 à 13, **caractérisé en ce que** le fond (38) du boîtier (24, 36) présente une géométrie dépendant du sens de rotation ou ne dépendant pas du sens de rotation.

15. Boîtier (24, 36) comportant une bague d'étanchéité glissante selon une des revendications 1 à 14, **caractérisé en ce que** la section annulaire radiale (8) du manchon (5) présente une structure dépendant du sens de rotation ou ne dépendant pas du sens de rotation.

16. Boîtier de comportant une bague d'étanchéité glissante selon une des revendications 1 à 15, **caractérisé en ce que** la section annulaire radiale (8) du manchon (5) présente une géométrie dépendant du sens de rotation ou ne dépendant pas du sens de rotation.

17. Pompe à eau de véhicule automobile, comportant un boîtier (1) dans lequel s'appuie en rotation un arbre de pompe (2) dont l'extrémité dépassant du boîtier (1) supporte une arbre de pompe (3) et qui est isolé par un boîtier (24, 36) comportant une bague d'étanchéité glissante (4) selon une des revendications 1 à 16, un espace intérieur (40) recevant le fluide de refroidissement/lubrification de la pompe à eau étant raccordé à l'espace de collecte (41) de la bague d'étanchéité glissante (4) par la conduite d'alimentation (39).
